(19) Europäisches Patentamt / European Patent Office / Office européen des brevets

(11) **EP 1 625 772 B1**

(12) **FASCICULE DE BREVET EUROPEEN**

(45) Date de publication et mention
de la délivrance du brevet:
**24.01.2007 Bulletin 2007/04**

(21) Numéro de dépôt: **04742419.7**

(22) Date de dépôt: **01.04.2004**

(51) Int Cl.:
*H05B 3/02* *(2006.01)*    *A47J 31/54* *(2006.01)*

(86) Numéro de dépôt international:
**PCT/FR2004/000821**

(87) Numéro de publication internationale:
**WO 2004/105438 (02.12.2004 Gazette 2004/49)**

(54) **DISPOSITIF DE CHAUFFAGE D UN LIQUIDE POUR APPAREIL ELECTROME     NAGER, APPAREIL ELECTROMENAGER EQUIPE D UN TEL DISPOSITIF**

EINRICHTUNG ZUR ERWÄRMUNG EINER FLÜSSIGKEIT FÜR EIN HAUSHALTSGERÄT, MIT DER EINRICHTUNG AUSGESTATTETES HAUSHALTSGERÄT

DEVICE FOR HEATING A LIQUID FOR A DOMESTIC APPLIANCE, DOMESTIC APPLIANCE FITTED WITH SAID DEVICE

(84) Etats contractants désignés:
**AT BE BG CH CY CZ DE DK EE ES FI FR GB GR HU IE IT LI LU MC NL PL PT RO SE SI SK TR**

(30) Priorité: **19.05.2003 FR 0305978**

(43) Date de publication de la demande:
**15.02.2006 Bulletin 2006/07**

(73) Titulaire: **SEB S.A.**
**69130 Ecully (FR)**

(72) Inventeur: **GOURAND, Thierry**
**F-39700 Orchamps (FR)**

(56) Documents cités:
**EP-A- 0 485 211**          **EP-A- 1 067 822**
**FR-A- 2 778 729**          **GB-A- 2 135 052**
**US-A- 4 975 559**          **US-A1- 2002 141 742**

• **PATENT ABSTRACTS OF JAPAN vol. 007, no. 211 (M-243), 17 septembre 1983 (1983-09-17) -& JP 58 106351 A (MATSUSHITA DENKI SANGYO KK), 24 juin 1983 (1983-06-24)**

EP 1 625 772 B1

## Description

### Domaine technique

L'invention se rattache au secteur des appareils électroménagers. Elle vise plus particulièrement les appareils à usage domestique nécessitant le chauffage d'un liquide à une température inférieure à celle de passage en phase vapeur, et plus particulièrement d'eau. Parmi ces appareils on peut citer les cafetières électriques, les machines espresso, les distributeurs de boissons chaudes nécessitant la production rapide d'une eau à une température comprise entre 60°C et 90°C.

L'invention concerne plus spécifiquement une structure du dispositif de chauffage du liquide, qui permet un chauffage du liquide en un temps nettement inférieur à celui des dispositifs existants.

### Techniques antérieures

De façon générale, les appareils nécessitant la production d'eau chaude en continu comportent des dispositifs de chauffage qui incluent des résistances électriques qui sont associées à un corps de chauffe, de manière à transmettre à ce dernier une certaine quantité d'énergie calorifique. Ce corps de chauffe comporte un circuit de circulation de l'eau, de sorte que lorsque l'eau traverse le corps de chauffe, elle reçoit une partie de l'énergie fournie par la résistance. De multiples architectures ont déjà été proposées pour agencer le circuit de circulation ainsi que la résistance au sein du corps de chauffe. Ainsi, de façon courante, la résistance est noyée à l'intérieur du corps de chauffe, qui est réalisé en un métal, et typiquement en aluminium.

Pour éviter tout risque électrique, cette résistance est généralement blindée, puis noyée, brasée ou sertie dans la masse du corps de chauffe.

Le circuit de circulation de l'eau peut être réalisé de manière diverse, et notamment être formé par un tube lui-même intégré, par exemple par surmoulage dans le corps de chauffe.

L'ensemble des systèmes connus à ce jour présentent de multiples inconvénients, et notamment une forte inertie thermique, du fait que la résistance est noyée dans le corps de chauffe, et qu'elle doit être blindée. Une longue phase de pré-chauffe est donc absolument nécessaire pour porter le corps de chauffe à température, avant qu'il ne puisse assurer le chauffage du liquide qui le parcourt.

En d'autres termes, il est impossible avec les systèmes existants d'obtenir de l'eau chaude pratiquement dès le début du cycle de fonctionnement.

A cause de cette inertie thermique, il est également nécessaire d'assurer une alimentation cyclique de la résistance par un thermostat de régulation, pour maintenir le corps de chauffe à température constante, même dans les phases de non-utilisation, et ce afin de pouvoir bénéficier d'une eau suffisamment chaude dès l'entrée dans une nouvelle phase d'utilisation.

Ces inconvénients se retrouvent dans les dispositifs décrits dans le document EP 0 345 528, qui comportent un corps de chauffe principal, à l'intérieur duquel est noyée une résistance blindée. Ce corps de chauffe est associé à un élément complémentaire, formant un couvercle, de sorte à définir un volume de circulation du liquide. Le corps central peut être soit plat, soit cylindrique. Un tel montage possède une forte inertie thermique, puisque la résistance chauffante est noyée au sein du matériau formant le corps de chauffe, avec les inconvénients évoqués ci-avant.

Dans le domaine des appareils électroménagers mettant en oeuvre un chauffage d'eau, on connaît également les chaudières telles que celles décrites dans le document WO 99/59453. Ce type de chaudière comporte une chambre cylindrique en volume, dont la paroi est équipée d'une résistance localisée en partie basse. Cette résistance sérigraphiée sur la paroi de la chambre provoque le chauffage du liquide contenu dans la chambre. Ce type de chaudière de fort volume ne peut bien entendu pas supprimer le temps de préchauffe de la chaudière, de sorte qu'il ne permet pas d'obtenir une eau à température suffisante dès la mise en marche du dispositif. En outre, il convient de prévoir une régulation de température pour maintenir, par de longs cycliques d'apport d'énergie thermique, la température à une consigne prédéterminée.

Un premier problème que cherche à résoudre l'invention est celui de diminuer le temps à partir de la mise en marche du dispositif de chauffe, pour lequel l'eau ou plus généralement le liquide est à température suffisante.

Un autre problème que cherche à résoudre l'invention est celui de limiter autant que possible les pertes d'énergie dans les phases de non-utilisation d'un appareil de chauffe.

Un autre problème que cherche à résoudre l'invention est de limiter l'apport d'énergie calorifique au strict minimum pour obtenir l'obtention d'un liquide à température voulue.

La structure du dispositif de chauffage doit toutefois rester simple et de coût de fabrication modeste.

### Exposé de l'invention

L'invention concerne donc un dispositif de chauffage d'un liquide pour appareil électroménager. De façon connue, un tel dispositif comporte un corps principal relié à un réservoir de liquide, et qui est associé à un élément complémentaire recouvrant une de ses faces, pour définir un volume de circulation de liquide.

Conformément à l'invention, le corps principal présente une inertie thermique inférieure à celle de l'aluminium et l'élément complémentaire présente une résistance chauffante sérigraphiée sur sa face opposée à celle en regard du corps principal.

Par inertie thermique (Ith), on entend la capacité d'un corps à emmagasiner plus ou moins de chaleur, ce qui peut s'exprimer par le produit de la valeur de sa densité massique (p) par la valeur de sa capacité thermique spécifique (cp).

$$Ith = \rho \times cp$$

A ce titre, on relève que les corps métalliques présentent usuellement une forte inertie thermique, ne serait-ce que par leur forte densité massique. En d'autres termes, selon l'invention le corps principal est une sorte "d'isolant thermique" en ce que, lors d'une phase de chauffe, il prend beaucoup moins de calories que le liquide en circulation.

Avantageusement, ce corps principal est réalisé en plastique.

Avantageusement, l'élément complémentaire présente un fort coefficient de conduction thermique transversal, par exemple supérieur à 40. Par coefficient de conduction thermique transversal (Cth), on entend le rapport de la valeur du coefficient de conductibilité thermique (λ) du matériau de l'élément complémentaire de chauffe que divise la valeur de son épaisseur (e) exprimée en millimètre.

$$Cth = \lambda / e$$

En d'autres termes, l'élément complémentaire transmet très rapidement par conduction l'énergie calorifique de la résistance chauffante au liquide, soit que l'épaisseur soit réduite, de l'ordre de 3mm pour un matériau comme l'aluminium à fort coefficient de conductibilité, soit que l'épaisseur soit très réduite, de l'ordre du millimètre, pour un matériau de moindre coefficient de conductibilité comme l'inox.

Incidemment, le fait que la résistance chauffante soit de type sérigraphié et ceci en combinaison avec le bon coefficient de conduction thermique transversal fait que l'élément complémentaire de chauffe présente également une faible inertie thermique, diminuant les pertes énergétiques. Or, ce type d'élément chauffant sérigraphié permet de réaliser une chauffe uniforme sur une grande surface en regard du liquide, ce qui augmente son efficacité de conductibilité thermique générale.

Autrement dit, le dispositif de chauffage comporte un corps principal qui est relativement isolant thermiquement, et qui est recouvert par un élément chauffant rapide. Cet élément chauffant transmet donc une énergie calorifique au liquide circulant dans l'espace qui le sépare du corps principal. Du fait du fort coefficient de transfert thermique par conduction de l'élément complémentaire, l'essentiel de l'énergie dissipée par la résistance sérigraphiée se transmet au liquide en circulation, plutôt que de s'accumuler dans l'élément complémentaire chauffant.

De même, le corps principal de chauffe possède une faible inertie thermique, de sorte qu'il emmagasine qu'une faible quantité d'énergie en provenance de l'élément chauffant.

Il s'ensuit que le liquide reçoit très rapidement et de manière quasi intégrale l'énergie calorifique en provenance de la résistance sérigraphiée, de sorte que le chauffage du liquide est quasi instantané. De même, le corps principal ne participe pratiquement pas aux phénomènes de chauffage du liquide, de sorte que lorsque le dispositif ne fonctionne pas, il n'est pas nécessaire de fournir une quantité d'énergie pour qu'il reste à une température suffisante.

Autrement dit, la consommation du dispositif de chauffage en dehors des phases de chauffage proprement dites est nulle. De manière corollaire, il n'est pratiquement pas nécessaire d'effectuer de longues phases de préchauffe au début de l'utilisation du dispositif, puisque le corps de chauffe n'a pas besoin de recevoir une quantité importante d'énergie pour arriver à température d'utilisation.

En pratique, le principe de l'invention peut être mis en oeuvre sur des dispositifs de chauffage possédant différentes géométries. Ainsi, dans une première forme de réalisation, le corps central peut être cylindrique, et recevoir sur sa face extérieure l'élément complémentaire chauffant formant un manchon.

Dans une autre forme de réalisation, le corps central peut être plat, et recevoir alors un élément chauffant plat également.

Pour augmenter l'efficacité du dispositif, on peut prévoir que le corps principal comporte une rainure permettant de définir avec l'élément complémentaire un canal de circulation du liquide, augmentant ainsi le chemin parcouru par ce dernier au sein du dispositif de chauffe, et donc sa capacité à recevoir de l'énergie calorifique.

Dans le même but, la résistance sérigraphiée peut être avantageusement localisée à l'aplomb du canal de circulation du liquide.

En pratique, lorsque le dispositif est de forme générale cylindrique, la rainure peut être hélicoïdale, tandis que lorsque le corps central de chauffe est plat, la rainure peut être alors en forme de spirale.

Dans le même esprit, le corps principal de chauffe peut être creux, de manière à encore limiter sa masse, donc son inertie thermique.

Avantageusement, un capteur de température est agencé sur l'élément complémentaire, et le dispositif de chauffage comprend un circuit électrique et/ou électronique régulant la température du corps complémentaire à une valeur de consigne, de préférence comprise entre 70 et 90°C.

Du fait que l'élément complémentaire possède une forte conductibilité transversale et que le corps principal et l'élément complémentaire présentent une faible inertie thermique, la régulation électrique et/ou électronique est particulièrement dynamique, quasi permanente, faisant que le liquide sort à une température plutôt stable avec une consommation énergétique minimisée.

## Description sommaire des figures

La manière de réaliser l'invention, ainsi que les avantages qui en découlent ressortiront bien de la description du mode de réalisation qui suit, à l'appui des figures annexées dans lesquelles :

La figure 1 est une vue en perspective éclatée du dispositif de chauffe conforme à l'invention, montrée avant assemblage.
La figure 2 est une vue en coupe longitudinale du dispositif de chauffe de la figure 1, montrée dans une configuration assemblée.

## Manière de réaliser l'invention

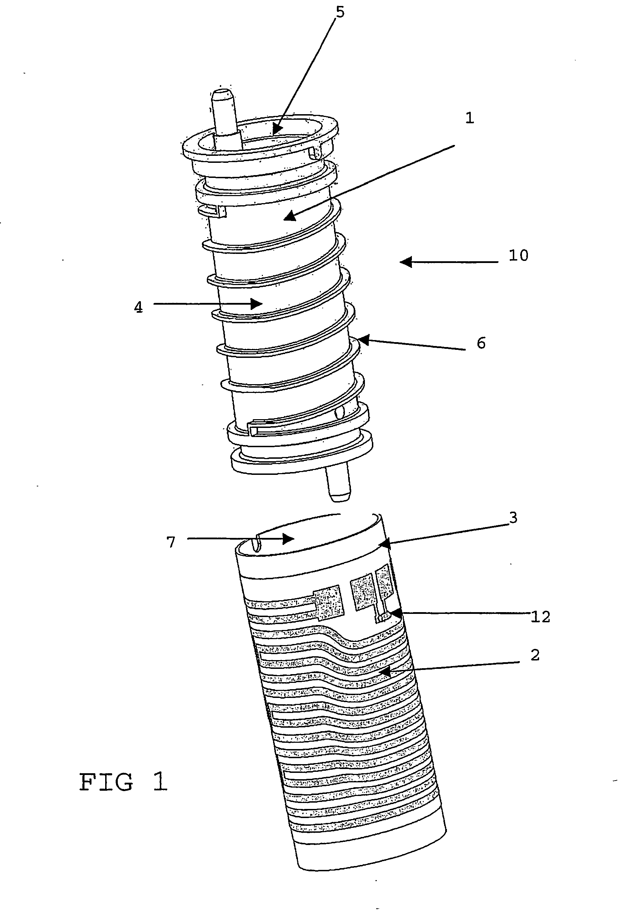

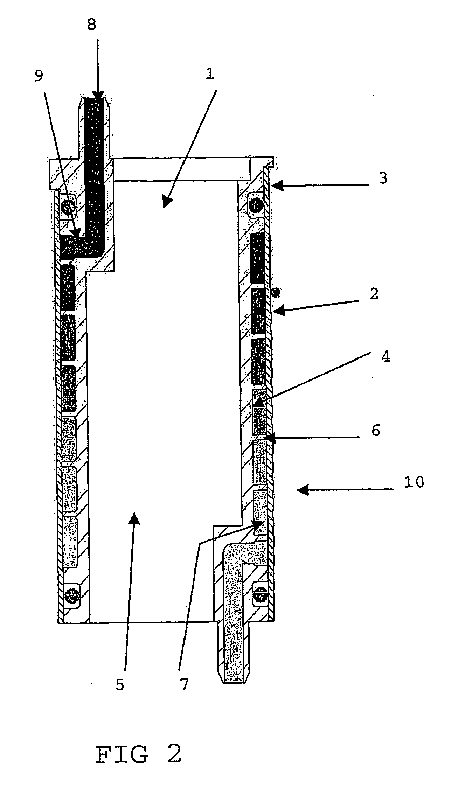

Les figures 1 et 2 illustrent un mode de réalisation de l'invention dans lequel le dispositif de chauffe est cylindrique.

Dans ce cas, le dispositif (10) comporte un corps principal central (1) associé à un élément complémentaire chauffant (3) sous la forme d'un manchon cylindrique. L'espace défini entre la face (6) extérieure du corps principal central (1) et la face intérieure (7) du manchon (3), forme le volume en cylindre creux de circulation du liquide.

Dans la forme illustrée, la face extérieure du corps central (1) comporte une rainure hélicoïdale (4) qui permet de définir avec le manchon un cheminement du liquide autour du corps central (1). Toutefois, dans d'autres formes de réalisation, non représentées, la face extérieure du corps central (1) peut être totalement cylindrique, de manière à définir avec le manchon un volume de circulation d'épaisseur constante, s'étendant le long du cylindre. D'autres variantes peuvent être envisagées sans sortir du cadre de l'invention.

En pratique, le corps principal central (1) est comme illustré à la figure 2, relié à une alimentation (8) en eau froide. Cette arrivée (8) est reliée à la face extérieure (6) par un canal (9) sensiblement radial, qui débouche sur la face extérieure (6).

Le corps principal central (1) est réalisé de préférence en matière plastique, ou plus généralement dans un matériau possédant une faible inertie thermique Ith, en tout cas inférieure à celle de l'aluminium de l'ordre de 2,30, de manière à n'emmagasiner qu'une faible partie de l'énergie de chauffage. Comme matériau susceptible de bien convenir dans la réalisation du corps principale selon l'invention, on peut citer le polyamide (Ith=1,9), le polyacétal (Ith=2), le polypropylène (Ith=1,6), le poysulfone (Ith=1,4) ou le polycarbonate (Ith=1,5).

Dans la forme illustrée à la figure 2, on observe que le corps principal central (1) de chauffe présente un évidement central (5), destiné à diminuer encore plus son poids, donc son inertie thermique.

Dans l'exemple illustré aux figures 1 et 2, la rainure (4) présente une profondeur de l'ordre de 3 millimètres, et une largeur d'environ 8 millimètres. Cette rainure (4), présente une géométrie hélicoïdale, d'un pas de 9 millimètres environ. En d'autres termes, la profondeur est plus faible que la largeur de telle sorte à "étaler" le liquide contre l'élément complémentaire chauffant et ainsi favoriser le transfert de calories.

De préférence, le manchon (3) est réalisé de telle sorte à présenter un fort coefficient de conduction thermique transversal et une faible inertie thermique.

L'épaisseur du manchon (3) est réduite au minimum en fonction du matériau de base pour diminuer cette inertie thermique, et pour augmenter les phénomènes de conduction. Parmi les matériaux donnant de bons résultats en termes de propriétés thermiques, on peut citer le cuivre, l'acier inoxydable, l'aluminium ou le verre. Il importe que le manchon (3) permette le dépôt d'une résistance électrique chauffante (2) sérigraphiée.

Le procédé de réalisation des pistes chauffantes consiste à sérigraphier une ou plusieurs couches de matériau isolant, puis une couche de pâte conductrice selon un chemin particulier, une couche pour former des plots de contact et enfin une ou plusieurs couches de matériau isolant. La puissance disponible peut être de l'ordre de 2000W.

Cette résistance électrique (2) forme donc un ruban qui, dans la forme illustrée, est agencé sous forme de cercles transversaux avec décalage le long d'une même ligne longitudinale : toute la surface interne du manchon forme une plaque chauffante contre laquelle les rainures forcent le liquide à couler. Si désiré, la résistance sérigraphiée peut être hélicoïdale, et se trouver à l'aplomb des canaux définis par la rainure (4) du corps principal de chauffe (1). Dans ce cas, l'efficacité du chauffage et sa rapidité sont améliorées.

Ainsi, pour un manchon en inox ayant un diamètre extérieur de l'ordre de 45 mm, l'épaisseur du manchon (3) peut être avantageusement comprise entre 0,5 et 1,5 millimètres, de préférence entre 0,8 et 1 millimètre. Son coefficient de conduction thermique transversal Cth est alors de l'ordre de 60. L'avantage de l'inox est sa résistance à la corrosion et sa tenue à haute température facilitant la réalisation d'éléments chauffants plats.

L'emploi d'un manchon en aluminium est envisageable, mais avec des éléments chauffants sur support polyimide et des pâtes à plus faible température de cuisson. Par exemple, pour un manchon d'aluminium d'épaisseur de l'ordre de 3 millimètres permettant la réalisation d'éléments chauffants sérigraphiés, son coefficient de conduction thermique Cth est de l'ordre de 70.

En pratique, la circulation de l'eau dans le cheminement le long de la face externe du corps principal peut s'effectuer soit uniquement par gravité, soit par l'intermédiaire d'une pompe.

Utilement, un capteur de température (12), telle qu'une résistance CTN, est rapportée contre l'élément complémentaire chauffant et est branchée à un circuit électronique pilotant l'alimentation électrique des pistes résistives chauffantes de telle sorte à maintenir cet élément chauffant en forme de manchon à une température prédéterminée en période de circulation d'eau.

Lors d'une première mise en marche avec un dispositif de chauffage froid, la régulation commande une pré-chauffe rapide, de l'ordre de 2 à 3 secondes, avant le début de la circulation d'eau. Cette pré-chauffe particulièrement rapide et quasiment non perceptible par l'utilisateur vient de la très faible inertie thermique globale du dispositif et de son efficacité de transfert thermique essentiellement vers l'eau contenue dans le circuit.

Après de nombreux essais en atelier, il s'est avéré que, pour obtenir une eau chaude à 80°C en sortie, il suffisait de réguler par la suite, lors de l'écoulement du liquide, la température de l'élément complémentaire chauffant à une valeur de consigne égale à celle désirée du liquide simplement majorée d'une valeur constante, par exemple de 30 °C.

Lorsque le dispositif de chauffe est alimenté au moyen d'une pompe, celle-ci peut participer à la régulation. En effet, si le débit de la pompe s'avère trop faible, la température du manchon monte au dessus de sa consigne provoquant la coupure de l'élément chauffant tout en laissant la pompe en marche. Par contre, si de débit de la pompe s'avère trop fort, la température du manchon baissera et une commande arrêtera momentanément la pompe.

En pratique, les mesures effectuées avec ce type de dispositif de chauffe permettent d'obtenir un chauffage d'environ 25 centilitres d'eau à une température comprise entre 70 et 80°C en 6 à 7 secondes seulement. La phase de pré-chauffe, seulement optionnelle, est particulièrement réduite, puisque le début d'écoulement peut intervenir au plus tard trois secondes environ après la mise en fonctionnement du dispositif de chauffe.

Il ressort de ce qui précède que le dispositif conforme à l'invention présente de multiples avantages, et notamment celui d'avoir une inertie thermique particulièrement réduite. Il s'ensuit donc que l'eau circulant dans le dispositif chauffe de manière quasi instantanée lors de la mise sous tension de la résistance chauffante.

Lors de la mise hors tension de la résistance, le dispositif de chauffe refroidit rapidement grâce à sa faible inertie thermique, préservant ainsi de l'échauffement l'environnement proche et facilitant également la régulation de la température de sortie.

La présence de la résistance sérigraphiée assure également une répartition de la puissance de chauffe sur une plus grande surface par rapport aux solutions existantes, de manière à optimiser le transfert thermique.

En variante, le corps central peut être plat et recevoir un élément chauffant également plat. Dans ce cas, la face du corps central en regard de l'élément chauffant est complétée d'une rainure en forme de spirale, l'eau froide arrivant par le centre, l'eau chaude sortant en périphérie, ou inversement.

## Revendications

1. Dispositif de chauffage d'un liquide pour appareil électroménager, comportant un corps principal (1), relié à un réservoir de liquide, et associé à un élément complémentaire (3) recouvrant une face du corps principal (1) pour définir un volume de circulation du liquide, **caractérisé en ce que** le corps principal présente une inertie thermique inférieure à celle de l'aluminium <u>et **en ce que**</u> ledit élément complémentaire (3) présente une résistance chauffante (2) sérigraphiée sur sa face opposée à celle en regard du corps principal (1).

2. Dispositif de chauffage selon la revendication 1, **caractérisé en ce que** le corps principal (1) est réalisé en plastique.

3. Dispositif de chauffage selon la revendication 1, **caractérisé en ce que** l'élément complémentaire (3) réalisé en matériau métallique présente un coefficient de conduction thermique transversal (Cth) supérieur à 40.

4. Dispositif de chauffage selon la revendication 3, **caractérisé en ce que** l'élément complémentaire (3) est réalisé en acier inoxydable d'épaisseur comprise entre 0,5 et 1,5 millimètres, de préférence entre 0,8 et 1 millimètre.

5. Dispositif de chauffage selon la revendication 1, **caractérisé en ce que** le corps principal (1) comporte une rainure permettant de définir avec l'élément complémentaire (3) un canal (4) de circulation du liquide.

6. Dispositif de chauffage selon la revendication 5, **caractérisé en ce que** la résistance (2) sérigraphiée est localisée sensiblement à l'aplomb du canal (4) de circulation de liquide.

7. Dispositif de chauffage selon la revendication 5, **caractérisé en ce que** le corps principal (1) est plat et **en ce que** la rainure est en forme de spirale.

8. Dispositif de chauffage selon l'une des revendications 1 à 5, **caractérisé en ce que** le corps principal (1) est cylindrique, et reçoit sur sa face extérieure l'élément complémentaire (3) sous forme de manchon.

9. Dispositif de chauffage selon les revendications 5 et 8, **caractérisé en ce que** la rainure est hélicoïdale.

10. Dispositif de chauffage selon la revendication 8, **caractérisé en ce que** le corps principal (1) cylindrique est creux.

**11.** Dispositif de chauffage selon l'une des revendications précédentes **caractérisé en ce qu'**un capteur de température (12) est agencé sur l'élément complémentaire, et **en ce que** le dispositif comprend un circuit électrique / électronique relié à la résistance chauffante afin de réguler la température du corps complémentaire.

**Claims**

**1.** Device for heating a liquid for a household electric appliance, having a main body (1) connected to a reservoir for liquid, and associated with an additional element (3) covering a face of the main body (1) to define a liquid circulation volume, **characterized in that** the main body presents a thermal inertia lower than that of aluminum and **in that** said additional element (3) has a heating resistance (2) screen printed on its face opposed to that facing the main body (1).

**2.** Device for heating according to claim 1, **characterized in that** the main body (1) is made of plastic.

**3.** Device for heating according to claim 1, **characterized in that** the additional element (3) made of metallic material presents a transversal thermal conduction coefficient (Cth) higher than 40.

**4.** Device for heating according to claim 3, **characterized in that** the additional element (3) is made of stainless steel with a thickness comprised between 0.5 and 1.5 millimeters, preferably between 0.8 and 1 millimeter.

**5.** Device for heating according to claim 1, **characterized in that** the main body (1) has a groove making it possible to define with the additional element (3) a channel (4) for circulation of the liquid.

**6.** Device for heating according to claim 5, **characterized in that** screen printed resistance (2) is localized substantially in line with the liquid circulation channel (4).

**7.** Device for heating according to claim 5, **characterized in that** the main body (1) is flat and **in that** the groove is in the form of a spiral.

**8.** Device for heating according to one of claims 1 to 5, **characterized in that** the main body (1) is cylindrical, and receives on its outer face the additional element (3) in the form of a sleeve.

**9.** Device for heating according to the claims 5 and 8, **characterized in that** the groove is helical.

**10.** Device for heating according to claim 8, **characterized in that** the main cylindrical body (1) is hollow.

**11.** Device for heating according to one of the preceding claims **characterized in that** a temperature sensor (12) is arranged on the additional element, and **in that** the device comprises an electric/electronic circuit connected to the heating resistance in order to control the temperature of the additional body.

**Patentansprüche**

**1.** Vorrichtung zum Aufheizen einer Flüssigkeit für ein Haushaltsgerät, mit einem Hauptkörper (1), der mit einem Flüssigkeitsbehälter verbunden und einem komplementären Element (3) zugeordnet ist, der eine Seite des Hauptkörpers (1) abdeckt, um ein Flüssigkeitszirkulierungsvolumen zu definieren, **dadurch gekennzeichnet, dass** der Hauptkörper eine Wärmeträgheit aufweist, die kleiner ist als die von Aluminium und dass das komplementäre Element (3) einen Heizwiderstand (2) aufweist, der auf dessen Seite siebgedruckt ist, die derjenigen entgegengesetzt ist, die dem Hauptkörper (1) gegenüberliegt.

**2.** Heizvorrichtung nach Anspruch 1, **dadurch gekennzeichnet, dass** der Hauptkörper (1) aus Kunststoff besteht.

**3.** Heizvorrichtung nach Anspruch 1, **dadurch gekennzeichnet, dass** das aus Metall bestehende komplementäre Element (3) einen über 40 liegenden Wärmeleitkoeffizient (Cth) in Querrichtung aufweist.

**4.** Heizvorrichtung nach Anspruch 3, **dadurch gekennzeichnet, dass** das komplementäre Element (3) aus nicht rostendem Stahl mit einer Dicke zwischen 0,5 und 1,5 Millimetern, vorzugsweise zwischen 0,8 und 1 Millimeter besteht.

**5.** Heizvorrichtung nach Anspruch 1, **dadurch gekennzeichnet, dass** der Hauptkörper (1) eine Nut aufweist, die es ermöglicht, mit dem komplementären Element (3) einen Flüssigkeitszirkulierungskanal (4) zu bilden.

**6.** Heizvorrichtung nach Anspruch 5, **dadurch gekennzeichnet, dass** sich der siebgedruckte Widerstand (2) im Wesentlichen senkrecht zum Flüssigkeitszirkulierungskanal (4) befindet.

**7.** Heizvorrichtung nach Anspruch 5, **dadurch gekennzeichnet, dass** sich der Hauptkörper (1) flach und die Nut spiralförmig ist.

**8.** Heizvorrichtung nach einem der Ansprüche 1 bis 5, **dadurch gekennzeichnet, dass** der Hauptkörper (1) zylinderförmig ist und das komplementäre Element (3) an seiner Außenseite wie ein Stutzen aufnimmt.

9. Heizvorrichtung nach einem der Ansprüche 5 bis 8, **dadurch gekennzeichnet, dass** die Nut schraubenförmig ist.

10. Heizvorrichtung nach Anspruch 8, **dadurch gekennzeichnet, dass** der zylinderförmige Hauptkörper (1) hohl ist.

11. Heizvorrichtung nach einem der vorangehenden Ansprüche, **dadurch gekennzeichnet, dass** ein Temperatursensor (12) am komplementären Element angeordnet ist, dass die Vorrichtung einen elektrischen/elektronischen Kreis aufweist, der mit dem Heizwiderstand verbunden ist, um die Temperatur des komplementären Körpers zu regulieren.

FIG 1

FIG 2